# EUROPEAN PATENT SPECIFICATION

(11) **EP 4 477 407 B1**
(45) Date of publication and mention of the grant of the patent: **19.11.2025**
(21) Application number: 24178052.7
(22) Date of filing: 24.05.2024
(51) Int. Cl.: B32B 5/02, B32B 3/08, B32B 3/12, B32B 5/12, B32B 5/26, B32B 29/02, B32B 29/06

(54) **COMPOSITE PLATE FOR A FUEL CELL**
VERBUNDPLATTE FÜR EINE BRENNSTOFFZELLE
PLAQUE COMPOSITE POUR PILE À COMBUSTIBLE

(30) Priority: 13.06.2023 DE 102023115369
(43) Date of publication of application: 18.12.2024
(73) Proprietor: Aerostack GmbH, 72581 Dettingen an der Erms (DE)
(72) Inventor: BHAT-HIRE, Jitendra, 72581 Dettingen an der Erms (DE)
(74) Representative: LKGLOBAL Lorenz & Kopf Patentanwalt Attorney at Law PartG mbB

(56) References cited:
- DE-A1- 102013 206 334
- GB-A- 2 585 555
- US-A1- 2008 268 318
- US-A1- 2009 286 134
- US-A1- 2014 038 029

## Description

### FIELD OF THE INVENTION

The present invention relates to an end plate, a fuel cell, an energy supply system and a method for manufacturing end plates for a cell assembly.

### BACKGROUND OF THE INVENTION

Fuel cells that convert chemical to electrical energy may be deployed to power a wide range of vehicle systems. However, certain vehicle systems, like aircrafts, have difficulties in deploying fuel cells in view of their weight. Another aspect in relation to fuel cells in aircrafts are the requirements regarding stability to withstand possible physical conditions that may occur during operation of an aircraft, which requirements may result in bulky cell arrangements. For example, US 2009/286134 A1 discloses end plates for a fuel cell stack, comprising honeycomb core sandwiched between an outer end plate and an abutting layer, whereby the honeycomb core is filled/reinforced with a foam material. US 2014/038029 A1 discloses an energy storage module for a device for supplying voltage, comprising end plates each having at least three layers. DE 10 2013 206334 A1 discloses end plates for a fuel cell stack, comprising a porous carrier layer sandwiched between an outer end plate and an abutting layer. US 2008/268318 A1 discloses a carbon-cladded composite composition for use as a fuel cell flow field plate or bipolar plate, what are the end plates of a fuel cell. GB 2 585 555 A discloses a fuel cell stack assembly, comprising a positive end plate and a negative end plate, whereby each of the end plates is formed by a sandwich structure of a central structural element sandwiched by an end plate cover layer and an end plate manifold layer.

### SUMMARY OF THE INVENTION

There may thus be a need for an improved fuel cell with a high stability, low weight and wide range of deployability.

The object of the present invention is solved by the subject-matter of the independent claims; further embodiments are incorporated in the dependent claims. It should be noted that the following described aspects of the invention apply also for the end plate, for the fuel cell and for the method for manufacturing of end plates for a cell assembly.

According to the present invention, an end plate for a fuel cell is provided. The end plate comprises a first layer forming an outer end plate layer, a second layer forming an abutting layer for a cell assembly of the fuel cell and a core between the first layer and the second layer. The outer end plate layer comprises a first fibre composite structure providing structural tensile strength in a plane orientation of the outer end plate layer and forming a supporting structure to the abutting layer and the core. The abutting layer comprises a second fibre composite structure providing structural tensile strength in a plane orientation of the abutting layer. The abutting layer provides an electrical insulation for the abutting cell assembly, the abutting layer also providing a leak-tightness for media during operation of the fuel cell. The first fibre composite structure comprises a first fibre material and the second fibre composite structure comprises a second fibre material that is different than the first material. The core is provided as a sandwich core between the outer end plate layer and the abutting layer. The core along with the outer end plate layer provides the torsional and/or bending stiffness to the end plate. The core comprises a porous structure of a dielectric material comprising a plurality of volumes, the porous structure providing compressive strength. The outer end plate layer and the abutting layer are each connected to the core in a laminar manner, such that a sandwich plate is formed.

As an effect, the end plate provides high stability having less weight.

As an advantage, a light, stable and secure end plate for a cell assembly is yielded.

As an effect, the end plate provides low thermal expansion.

As an advantage, a more leak-tight connection of the end plate to the fuel cell is established.

As an advantage, less number of parts is provided to form the end plate.

As an advantage, core cells are electrically insulated.

As an advantage, a wide range of temperatures can be managed from -60 to between 180 and 200 degree Celsius.

As an advantage, up to 50% of weight with respect to the conventional method is saved.

According to an example, the first fibre composite structure comprises carbon fibres and the second fibre composite structure comprises glass fibres.

According to an example, the porous structure comprises a honeycomb structure.

According to an example, at least 50% of the pore volume comprises the filler material. Preferably, filled pore volume and unfilled pore volume are equally distributed across the porous structure.

According to the present invention, also a fuel cell is provided. The fuel cell comprises a plurality of fuel cells arranged as a cell assembly, a lower plate and an upper plate, at least one fastening element and a plurality of current collectors. The cell assembly is arranged between the lower plate and the upper plate. The at least one fastening element secures the lower plate and the upper plate against each other such that the cell assembly is fixedly hold between the lower plate and the upper plate. The plurality of current collectors is arranged between the cell assembly and the lower plate and/or the upper plate. At least one of the lower plate and the upper plate is provided as an end plate according to one of the previous examples. The end plate faces the cell assembly with an abutting layer.

As a further advantage, a light, stable and secure cell assembly is yielded.

According to the present invention, also an energy supply system is provided. The energy supply system comprises a fluid reservoir, a fluid supply and a fuel cell according to the previous examples. The fluid reservoir is configured to supply fluid, via the fluid supply to the fuel cell. The fluid supply is configured to be connected to the fuel cell. The fluid supply is configured to supply fluid and for discharge of exhaust gases. The end plates of the fuel cell are configured to provide access and connection for the fluid supply and electrical connections to the fuel cell. The fuel cell is configured to provide energy from the fluid by its electrical connections through the end plates.

According to the present invention, also a method for manufacturing of end plates for a cell assembly is provided. The method comprises the following steps:
- Providing a first layer forming an outer end plate layer;
- Providing a second layer forming an abutting layer for the cell assembly;
- Providing a core between the first layer and second layer. The outer end plate layer comprises a first fibre composite structure providing structural tensile strength in a plane orientation of the outer end plate layer and forming a supporting structure to the abutting layer and the core. The abutting layer comprises a second fibre composite structure providing structural tensile strength in a plane orientation of the abutting layer. The abutting layer provides an electrical insulation for the abutting cell assembly, the abutting layer also providing a leak-tightness for media during operation of the fuel cell. The first fibre composite structure comprises a first fibre material and the second fibre composite structure comprises a second fibre material that is different than the first material. The core is provided as a sandwich core between the outer end plate layer and the abutting layer. The core along with the outer end plate layer provides the torsional and/or bending stiffness to the end plate. The core comprises a porous structure of a dielectric material comprising a plurality of volumes, the porous structure providing compressive strength. The outer end plate layer and the abutting layer are each connected to the core in a laminar manner, such that a sandwich plate is formed. The current collector is joined to the abutting layer and the abutting layer is formed to overlap on the edge of the current collector, such that a sandwich plate is formed.

According to an aspect, a novel approach to build fuel cells using carbon fibre technology is provided. Carbon fibre possesses the welcoming properties of high tensile strength, low weight and can be manufactured as fibre composite structure. Though rigidity, electrical insulating capacity and leak-tightness with respect to fluid media are lacking. As carbon fibres can be used to manufacture composite materials, these properties however can be added to the composite material by other materials. As for example, rigidity and insulation may be provided by a material like reinforced paper or cellulose, like for example paper honeycomb structures. Leak-tightness may be provided by other materials that bind to the rigid and insulating material like paper, as for instance GFRP does. All together these materials interact to reinforce each other as part of a structural framework of a fuel cell. The structural framework provides a highly stable fuel cell at low weight or mass.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a cross section through an example of an end plate for a fuel cell.
Fig. 2 schematically shows an example of a porous structure of the core from Fig. 1.
Fig. 3 schematically shows a view on the abutting layer of an example of the end plate having media ports and an immersed current collector.
Fig. 4A schematically shows a cross section through the region where the lateral cover block of the media ports abuts the three layers of an example of the end plate.
Fig. 4B schematically shows a cross section through an example of the end plate with the immersed current collector.
Fig. 5 schematically shows an example of a fuel cell having the end plate as a lower plate and an upper plate.
Fig. 6 schematically shows an example of an energy supply system deploying the fuel cell.
Fig. 7 shows basics steps of a method for manufacturing of end plates for a cell assembly.

### DETAILED DESCRIPTION OF EMBODIMENTS

Certain embodiments will now be described in greater details with reference to the accompanying drawings.

Moreover, expressions such as "at least one of", when preceding a list of elements, modify the entire list of elements and do not modify the individual elements of the list.

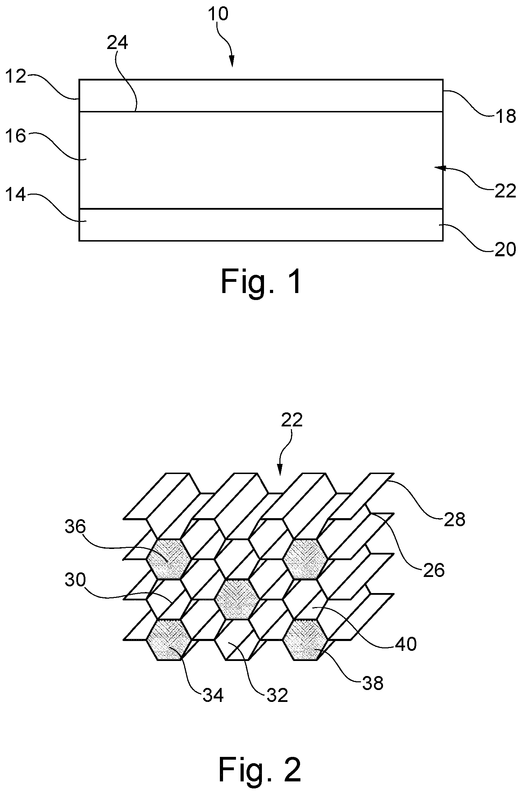

Fig. 1 schematically shows a cross section through an example of an end plate 10 for a fuel cell. The end plate 10 comprises a first layer forming an outer end plate layer 12, a second layer forming an abutting layer 14 for a cell assembly of the fuel cell and a core 16 between the first layer and the second layer. The outer end plate layer 12 comprises a first fibre composite structure providing structural tensile strength in a plane orientation of the outer end plate layer 12 and forming a supporting structure to the abutting layer 14 and the core 16. The abutting layer 14 comprises a second fibre composite structure providing structural tensile strength in a plane orientation of the abutting layer 14. The abutting layer 14 provides an electrical insulation for the abutting cell assembly, the abutting layer 14 also providing a leak-tightness for media during operation of the fuel cell. The first fibre composite structure comprises a first fibre material 18 and the second fibre composite structure comprises a second fibre material 20 that is different than the first material. The core 16 is provided as a sandwich core 16 between the outer end plate layer 12 and the abutting layer 14. The core 16 along with the outer end plate layer 12 provides the torsional and/or bending stiffness to the end plate 10. The core 16 comprises a porous structure 22 of a dielectric material comprising a plurality of volumes, the porous structure 22 providing compressive strength. The outer end plate layer 12 and the abutting layer 14 are each connected to the core 16 in a laminar manner (24), such that a sandwich plate is formed.

The "end plate" can also be referred to as cover, lid, cap, upper shell, end plate, top cover, cask cover, rear end cover, end plate, panel, disk, board, sheet slab outer end plates, compression plates, support structure.

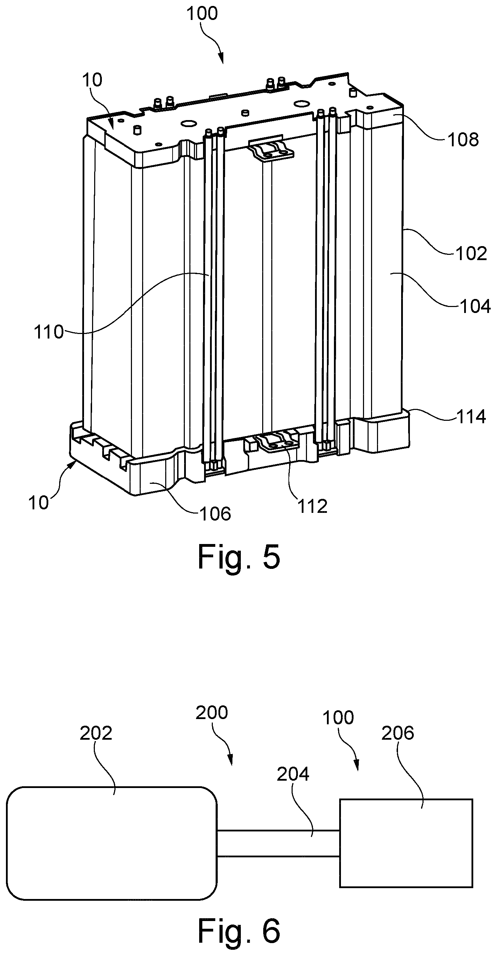

In an example, the end plate 10 represents a structural framework for the constructional stability of the cell assembly, as depicted later on in Fig. 5.

The "cell assembly" can also be referred to as cell components or cell stack.

The "fuel cell" can also be referred to as a component that converts the chemical energy of the fuel into electrical energy. The fuel cell can be operated with any substance providing energy, such as a fuel.

The "cell components" or "cell assembly" relates to an assembly of individual plates that form channels to the fuel and conduct electrical energy, not shown in Fig. 1.

The "fuel" can also be referred to as fluid or media.

In an example, the fuel is hydrogen.

In an example, the fuel is a hydrocarbon.

In an example, the fuel comprises nitrogen.

In an example, the fuel is air.

The "layer" can also be referred to as sheet, slab, component or coat.

The term "first layer" or "outer end plate layer" can be understood as the face of the end plate 10 pointing away to the outside, opposite to the cell components or cell assembly. It is not in contact with the cell stack or the electronic connections, current collectors or any other element of the cell components or cell assembly conducting an electric current, not shown in Fig. 1..

The term "second layer" or "abutting layer" can be understood as face of the end plate 10 pointing towards the cell assembly. It is in contact with the cell stack arrangement of the fuel cell. The second layer can be understood as connection portion of the end plate 10 to the cell components or cell assembly.

The "first layer" or "outer end plate layer" and "second layer" or "abutting layer" can also be referred to as layers.

The term "fibre composite structure" relates to a matrix comprising fibres. The fibres have a certain length, orientation, connection to each other, pattern or distribution in the matrix that can be described as structure. The fibres are not shown in Fig. 1.

In an example, the matrix is a polymer or a resin.

The term "structural tensile strength" relates to the stress that the layers can withstand while being stretched or pulled before breaking.

The term "plane orientation" relates to directions parallel to the largest surface of the layer.

The term "torsional strength" relates to the stress that the layers can withstand while being twisted before breaking (resistance to the twisting movements).

The term "bending strength" relates to the stress that the layers can withstand while being deformed before breaking (resistance to deformation).

The term electrical insulation can also be referred to as isolation or electrical isolation.

The term "electrical insulation" relates to a property of the layers of preventing conduction of any electrical current, not shown in Fig. 1.

In an example, the end plate 10 comprises the first layer that comprises a fibre material for providing tensile strength. The fibre material also provides electric conductivity. Electrical conductivity is not desired with respect to end plates of fuel cells, since electrical conductivity might cause short cuts to the fuel cell by the end plate 10. Hence the fuel cell components, the cell assembly etc., that conduct electricity are separated, i.e., electrically insulated from the first layer by the second layer, i.e., the abutting layer 14 and the cover, not shown in Fig. 1. The second layer and the cover comprise dielectric materials to provide for the insulation from the electronic parts of the fuel cell.

The term "leak-tightness" relates to the property of forming a barrier against the fluid, i.e., the media from the fuel cell that cannot be overcome by penetrating the respective layer by channels, fractures or pores, not shown in Fig. 1.

In an example, the third layer, i.e., abutting layer 14 is leak-tight with respect to the media.

The term "fibre material" relates to any solid material, forming an elongated structure.

In an example, the fibre material comprises a mixture of different types of fibres, not shown in Fig. 1.

The term "different" relates to the properties of the fibre material of the first and the second layer. The material of the fibres of the first and second layer is different with respect to chemical or physical properties, e.g., the first layer comprises carbon fibres and the second layer comprises glass fibres.

In an example, the first fibre composite structure comprises conductive fibres, and the second fibre composite structure comprises non-conductive fibres, i.e., dielectric fibres.

The term "sandwich" relates to the orientation of the core 16 with respect to the first and the second layer, the core 16 being in between the first and the second layer, such that the first layer covers a surface of the core 16, and the second layer covers the other surface of the core 16. The core 16 separates the first layer from the second layer, as shown in Fig. 1.

The term "porous structure" relates to a plurality of hollow structures, i.e., pores, channels, tunnels, recesses, lumens and networks inside the core 16, that enhance the inner surface of the core 16 and provide space for a volume inside the core 16, and the volume does not comprise the material of the core 16, not shown in Fig. 1.

In an example, the core 16 provides a high ratio of insulation and structural stiffness to the end plate 10. This is achieved by a maximum of interconnections provided by pore wall material with respect to the volume filled out by the pores.

The term "plurality of volumes" relates to the space inside the core 16 structure that is not filled by the material of the core 16.

The "compressive strength" can also be referred to as resistance to pressure.

The "structural stiffness" can also be referred as the rigidness of the component or resistance to deformation.

The term "In-plane" relates to the direction parallel to the fiber direction or parallel to the largest face.

The term "Out of Plane" relates to the direction perpendicular to the fiber direction or perpendicular to the largest face. The term "laminar manner" relates to the way in which the layers are interconnected with each other. The layers are interconnected, or laminated with each other via their largest surface, such that, i.e., the largest surface or face of the first layers abuts the largest outer surface or face of the core 16. The fibres of the fibre composite structure of the first layer and the second layer extend in planar orientation, parallel to their largest surface.

The fibre structures of the first and the second layer extend parallel to the largest faces of the core 16, not shown in Fig. 1.

In an example, the first and second layer stick to the core 16 by adhesive forces.

In an example, a connection layer like an adhesive is provided between the core 16 and the adjacent, i.e., adjoining first and second layer.

In an example, the adhesive force is generated by heating the matrix material of the first and the second layer and then pressing the first and the second layer against the core 16, not shown in Fig. 1.

In an example, an interconnection between faces of the first and second layers as well as the core 16 is configured to form a unity of the three layers with their properties combined. The properties combined are the tensile strength of the first layer, the rigidness and the electric insulation effect of the core 16, the electric insulating effect and the leak-tightness of the second layer.

In an example, a composite material is yielded, as shown in Fig. 1.

In an example, the synergistic effect between the first layer, the second layer and the core 16 is a low thermal expansion among all three components combined to the composite material.

In an example, a composite material with an overall low thermal expansion is yielded.

In an example not shown in Fig. 1, first fibre composite structure comprises carbon fibres and the second fibre composite structure comprises glass fibres.

In an example, the carbon fibres provide high tensile strength.

In an example, the carbon fibres are conductive and the core 16 comprising dielectric material and the second layer with its glass fibres electrically insulate the carbon fibres from the electronic current of the cell assembly.

The first layer can thus be conductive, but the second layer is non-conductive, i.e., dielectric, not shown in Fig. 1.

As an advantage, carbon fibre-reinforced cell assembly can be provided.

In an example, the first fibre composite structure is CFRP.

In an example, the second fibre composite structure is GFRP with e or s-glass fibres.

Fig. 2 schematically shows an example of a porous structure 22 of the core 16 from Fig. 1. The porous structure 22 provides the plurality of volumes as pore volume 26 and pore walls 28.

In an option and preferably, the openings of pores 30 of the pore structure open towards the outer end plate layer 12 and the abutting layer 14.

In an option and preferably, the pore walls 28 extend traverse to the outer end plate layer 12 and the abutting layer 14.

The term "pore volume" relates to the overall volume of every pore and not the pore volume of a single pore.

In an example, the pores exclusively open up at the largest surface of core 16.

In another example, the pores exclusively open up at the lateral faces of the core 16, not shown in Fig. 2.

In an example, the pore walls 28 extend perpendicular from one largest face of the core 16 to the other largest face of the core 16.

In an example, the pore walls 28 extend perpendicular from one lateral face of the core 16 to the other lateral face of the core 16, not shown in Fig. 2.

In an example, the pore walls 28 and the pores comprise various shapes and the pore walls 28 come with various thicknesses.

In an example, axes of the pores cross in the core 16.

In an example, a part of the matrix material of the first and the second layer is taken up by the openings of the pores, to increase binding strength, not shown in Fig. 2.

In an example, a part of the fibres of the first and the second layer lurks inside the openings of the pores.

In an example, a foam structure is provided, e.g., with an open-cell structure or with a closed-cell structure.

In an example of Fig. 2, the porous structure 22 comprises a honeycomb structure 32.

In an example, the pore walls 28 comprise a hexagonal shape.

In an example, the pore walls 28 with the hexagonal shape extend perpendicularly from the first layer to the second layer.

In an example, openings of the pores of the honeycomb structure 32 are covered with a sheet of core 16 material, to increase stability of the honeycomb structure 32, not shown in Fig. 2.

In an example, the shape and geometry of pores varies in the pore structure.

In an example not shown in Fig. 2 the core 16 comprises cellulose.

In an example, a honeycomb made from cellulose material is provided, such as a paper honeycomb structure 32.

The term "cellulose" can also be referred to as paper.

In an example, the cellulose comprises additional substances to enhance tensile strength and/ or rigidity, not shown in Fig. 2.

In an example, the cellulose comprises additional substances to enhance tensile strength and/ or rigidity, when the cellulose is wet.

In an example, the surface of the cellulose core 16 is pre-treated in order to improve adherence to carbon fibres or glass fibres, i.e., CFRP or GFRP.

In an example, a paper foam structure is provided, e.g., with an open-cell structure or with a closed-cell structure, not shown in Fig. 2.

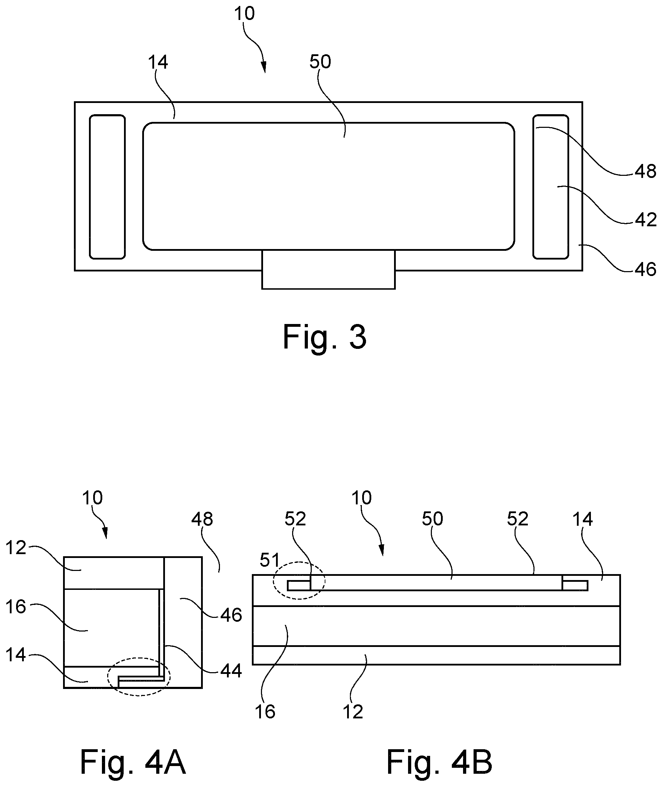

In an example, a lateral cover is provided for the core 16 to provide a sealing for the fuel. In an option, the lateral cover extends also across the lateral end faces of the first outer layer and the second outer layer. The lateral cover can also be referred to as end cover, side cover or ended side cover, not shown in Fig. 2 but as lateral cover block in Fig. 4A.

In an example, the lateral cover provides leak-tightness against hydrogen.

In an example, the lateral cover prevents fuel from entering the pores of the porous structure 22.

In an option, the lateral cover is provided as an L-formed cover overlapping an edge portion of the abutting layer 14.

In an example, the core 16 structure comprises wood, e.g., Ochroma wood or bamboo.

In an example, the core 16 comprises fire retardant substances.

In an option of Fig. 2, the core 16 further comprises reinforcement elements 34. The reinforcement elements are configured to structurally strengthen the pores.

In an example, fittings are provided to support the pore walls 28.

In an example, some pore walls 28 comprise thicker core 16 material.

In an example, the first and the second layer reinforce the pore structure of the core 16.

In an option of Fig. 2, the reinforcement elements 34 are provided as a filler material 36, the filler material 36 filling out at least a part of pore volume 26 of the core 16. The filler material 36 is configured to provide for compressive strength, structural stiffness and electric insulation.

The term "filler material" relates to a substance that conforms its shape to the pore walls 28 and pore volume 26 while being a fluid with a low viscosity and then being turned to a solid material or a fluid with very high viscosity.

In an example, the filler material 36 adheres to the pore walls 28.

The term "filler material" can also be referred to as filling.

In an example, the filler material 36 comprises a resin mixed with chopped glass fibres (short fibres), not shown in Fig. 2.

In an example, the filler material 36 further comprises a dielectric fibre material to provide for electric insulation.

In an example, the filler material 36 provides pores itself.

In a further option of Fig. 2, at least 50% of the pore volume 26 comprises the filler material 36.

In a further option and, preferably, filled pore volume 38 and unfilled pore volume 40 are equally distributed across the porous structure 22.

In an example, less than 50% of the pore volume 26 comprises the filler material 36, like e.g., 20, 30 or 40 %.

In another example, all pore walls 28 are in contact with filler material 36.

In another example, all pores are filled with filler material 36.

In an example, the pore volume 26 of the pores is half-filled with filler material 36.

In an example, the filling of the pore volume 26 of the pores with the filler material 36 varies from pore to pore, not shown in Fig. 2.

In an example, the filler material 36 fills the pores, such that the pore walls 28 are covered with filler material 36, but a smaller pore volume 26 resides inside the filled pores.

In another example, the pores are fully filled with the filler material 36.

In an example, the filled pores are arranged at certain predetermined areas of the core 16.

In an example, the filler material 36 lurking out of the pore openings facilitates the adhesion of the first and the second layer to the core 16, not shown in Fig. 2.

In an example, the filler material 36 is the matrix material of the fibre component structure of the first and second layer.

In an example, the filler material 36 hampers fluids, like hydrogen from entering the pore volume 26.

In an example not shown in Fig. 2, the first fibre composite structure of the outer end plate layer 12 comprises symmetrical fibre layers comprising fibre orientations of 0, +-45, and 90 degrees.

In an option and preferably, the first fibre composite structure makes the outer end plate layer 12 quasi-isotropic.

In an example, the fibres are randomly distributed layer by layer.

Fig. 3 schematically shows a view on the abutting layer 14 of an example of the end plate 10 having media ports and an immersed current collector. At least one media port 42 is provided in a lateral portion 44 of the abutting layer 14 for supplying fuel to the cell assembly. The at least one media port 42 is extending to an opposite face of the outer end plate layer 12, not visible in Fig. 3.

Fig. 4A schematically shows a cross section through the region where the lateral cover block of the media ports 42 abuts the three layers of an example of the end plate.

In an option and preferably, a lateral cover block 46 is provided having at least one void (48) forming the at least one media port 42 running lateral to an end face of the core 16 and the outer end plate layer 12. The lateral cover block 46 is shown in Fig. 3 as well.

The term "media port" relates to a cable guide or cable channel to guide supplies to the fuel cell through the end plate 10.

The term "lateral portion" relates to the smaller surface of the first layer or the second layer or the core 16, i.e., their side faces. The lateral portion 44 cuts through the fibres of the first layer and the second layer.

The term "lateral cover block" relates to a kind of veneer that blocks access for fluids to the lateral portion 44 of the end plate 10, i.e., hampers fluids like hydrogen from entering the pore structure of the core 16.

In an example, a cover layer is provided that comprises a resin layer that seals the lateral portion 44 of the end plate 10 in order to block fluid from leaking into the end plate 10.

In an example, the lateral cover block 46 is made of GFRP.

Fig. 4B schematically shows a cross section through an example of the end plate 10 with the immersed current collector 50. A current collector 50 for connecting cells of a cell assembly is provided at least partially embedded in the abutting layer 14. At least a part of a surface (52) of the current collector 50 is exposed to face the cell assembly.

In an option and preferably, the abutting layer 14 overlaps at least one side portion, shown by dashed circle 51 in Fig. 4B of the current collector 50 providing an engaging mount 52.

The term "current collector" relates to an element that receives or conducts electricity from the cell assembly of the fuel cell to electric conduits that supply electricity from the fuel cell.

In an example, the core 16 and the second layer are configured to electrically insulate the current collector 50 with respect to the first layer, i.e., the carbon fibres.

In an example, an end plate 10 according to the previous examples is provided. The first and second layer stick to the core 16 by adhesive forces. In addition, the first and second layer can also be joined through adhesive force at different regions thereby increasing the strength and better leakage protection against the media, not shown in Fig. 4B.

In an example the first and second layer can be joined at different locations with core 16 material comprising of the rest of the void volume between first and second layer.

Fig. 5 schematically shows an example of a fuel cell 100 having the end plate 10 as a lower plate 106 and an upper plate 108. The fuel cell 100 comprises a plurality of fuel cells 102 arranged as a cell assembly 104, a lower plate 106 and an upper plate 108, at least one fastening element 110 and a plurality of current collectors 112. The cell assembly 104 is arranged between the lower plate 106 and the upper plate 108. The at least one fastening element 110 secures the lower plate 106 and the upper plate 108 against each other such that the cell assembly 104 is fixedly hold between the lower plate 106 and the upper plate 108. The plurality of current collectors 112 is arranged between the cell assembly 104 and the lower plate 106 and/or the upper plate 108. At least one of the lower plate 106 and the upper plate 108 is provided as an end plate 10 according to one of the previous examples and options. The end plate 10 faces the cell assembly 104 with an abutting layer 114.

In an example, the end plates 106, 108 are attached to the connection portions at either end of the cell assembly 104 with their connection interface.

In an example, the end plates 106, 108 at either end of the cell assembly 104 are fastened to each other by the fastening elements 110 to provide for structural stability of the fuel cell.

In an example, electrical connection terminals are provided for connecting the cell assembly 104 to a load, e.g., an electric drive, electrically operated components and equipment and the like. The electrical connection terminals are connected to the plurality of current collectors 112.

In an example, the connection interfaces of the end plates 106, 108 are configured to fasten the end plates 106, 108 to the cell assembly 104 by the fastening elements 110 and to provide access for the electrical connections.

In an example, the lower plate and the upper plate 108 are configured to be secured against each other by shear and/or bending and/or torque and/or tension forces and/or preload forces.

In an example of Fig. 5, the lower plate 106 and the upper plate 108 are both provided as an end plate 10 according to one of the claims 1 to 11.

Fig. 6 schematically shows an example of an energy supply system 200 deploying the fuel cell. The energy supply system 200 comprises: a fluid reservoir 202, a fluid supply 204 and a fuel cell 206 according to one of the previous examples and options. The fluid reservoir is configured to supply fluid, via the fluid supply to the fuel cell 206. The fluid supply is configured to be connected to the fuel cell 206. The fluid supply is configured to supply fluid and for discharge of exhaust gases. The end plates 106, 108 of the fuel cell 206 are configured to provide access and connection for the fluid supply and electrical connections to the fuel cell 206. The fuel cell 206 is configured to provide energy from the fluid by its electrical connections through the end plates 106, 108.

In an example, the energy supply system 200 is configured to provide energy for an aircraft on a mission.

In an example, the plates possess media ports or channels in order to guide supplies to the cell assembly 104. These ports and channels are covered by a lateral cover to prevent substances from entering the inside of the end plate 10, not shown in Fig. 6.

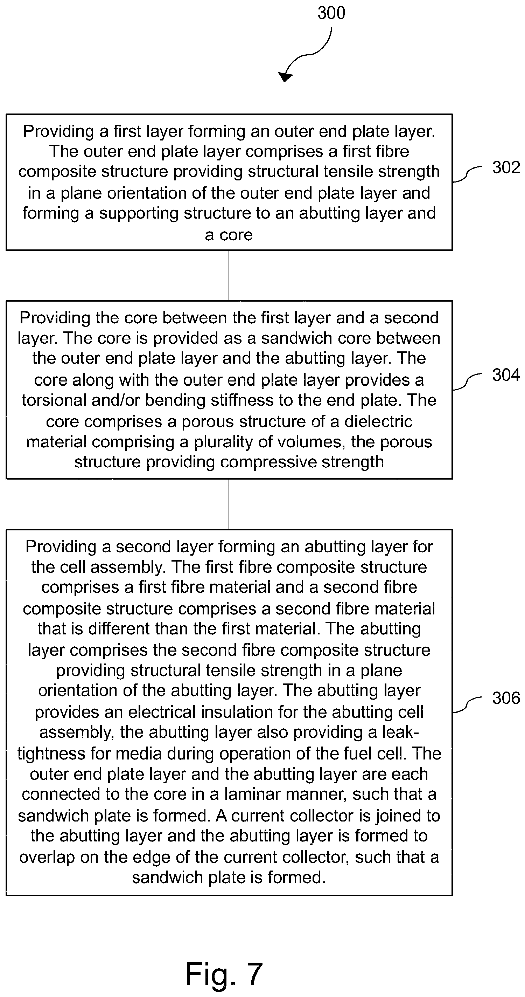

Fig. 7 shows basics steps of a method 300 for manufacturing of end plates 106, 108 for a cell assembly 104. The method comprises the steps:
- In a first step 302 a first layer forming an outer end plate layer 12 is provided. The outer end plate layer 12 comprises a first fibre composite structure providing structural tensile strength in a plane orientation of the outer end plate layer 12 and forming a supporting structure to an abutting layer 14 and a core 16,
- In a second step 304 the core 16 is provided between the first layer and a second layer. The core 16 is provided as a sandwich core 16 between the outer end plate layer 12 and the abutting layer 14. The core 16 along with the outer end plate layer 12 provides a torsional and/or bending stiffness to the end plate. The core 16 comprises a porous structure 22 of a dielectric material comprising a plurality of volumes, the porous structure 22 providing compressive strength,
- In a third step 306 a second layer forming an abutting layer 14 for the cell assembly 104 is provided. The first fibre composite structure comprises a first fibre material 18 and a second fibre composite structure comprises a second fibre material 20 that is different than the first material. The abutting layer 14 comprises the second fibre composite structure providing structural tensile strength in a plane orientation of the abutting layer 14. The abutting layer 14 provides an electrical insulation for the abutting cell assembly 104, the abutting layer 14 also providing a leak-tightness for media during operation of the fuel cell 100. The outer end plate layer 12 and the abutting layer 14 are each connected to the core 16 in a laminar manner 24, such that a sandwich plate is formed. A current collector 50 is joined to the abutting layer 14 and the abutting layer 14 is formed to overlap on the edge of the current collector 50, such that a sandwich plate is formed.

In an example of the method, the lateral cover block 46 which forms the void to the media is joined to the sandwich panel during the layer build up.

The term "lateral cover block" is integrated into the sandwich during the ply build up.

The "lateral cover block" is either made up of several layer of GFRP or can be used as a single solid block.

In an example, the media port 42 is formed through machining of the later cover block.

In an example, before adding the current collector 50 and a layer of overlapping GFRP on the abutting layer 14 side, the end plate 10 outer edges are machined. This is to ensure the precise outer edge for the current collector 50 positioning.

In an example, the first fibre composite structure providing structural tensile strength in a plane orientation has different directional properties.

In an example, the first fibre composite structure provides structural stiffness to the abutting layer and the core.

In an example, the individual lamina, i.e. the fiber orientation, of the outer end plate layer are connected to each other through adhesive.

In an option of the method, the core comprises partially filled cells using a filler material in combination with fibres which provide the compressive strength to the structure.

In an example, the abutting layer is joined to the core material through adhesive.

In an example, the current collector 50 is provided as an embedded feature on the abutting layer facing the cell assembly.

In an example, the current collector is joined to the abutting layer and the additional single layer of the second fibre material is formed to overlap on the edge of the current collector, such that a sandwich plate is formed.

In an example, the additional single layer is attached to the existing abutting layer and the outer edge of the current collector through adhesive.

In an example, the outer edge of the sandwich plate where the core material's open cells are visible, is covered with filler material to prevent any absorption of humidity.

## Claims

1. An end plate (10) for a fuel cell, the end plate comprising:
- a first layer forming an outer end plate layer (12);
- a second layer forming an abutting layer (14) for a cell assembly of the fuel cell; and
- a core (16) between the first layer and the second layer;
wherein the outer end plate layer comprises a first fibre composite structure providing structural tensile strength in a plane orientation of the outer end plate layer and forming a supporting structure to the abutting layer and the core;
wherein the abutting layer comprises a second fibre composite structure providing structural tensile strength in a plane orientation of the abutting layer;
wherein the abutting layer provides an electrical insulation for the abutting cell assembly, the abutting layer also providing a leak-tightness for media during operation of the fuel cell;
wherein the first fibre composite structure comprises a first fibre material (18) and the second fibre composite structure comprises a second fibre material (20) that is different than the first material;
wherein the core is provided as a sandwich core between the outer end plate layer and the abutting layer;
wherein the core along with the outer end plate layer provides the torsional and/or bending stiffness to the end plate;
wherein the core comprises a porous structure (22) of a dielectric material comprising a plurality of volumes, the porous structure providing compressive strength ; and
wherein the outer end plate layer and the abutting layer are each connected to the core in a laminar manner (24), such that a sandwich plate is formed.

2. End plate according to claim 1, wherein the first fibre composite structure comprises carbon fibres; and
wherein the second fibre composite structure comprises glass fibres.

3. End plate according to claim 1 or 2, wherein the porous structure provides the plurality of volumes as pore volume (26) and pore walls (28);
wherein, preferably, the openings of pores (30) of the pore structure open towards the outer end plate layer and the abutting layer; and
wherein, preferably, the pore walls extend traverse to the outer end plate layer and the abutting layer.

4. End plate according to claim 1, 2 or 3, wherein the porous structure comprises a honeycomb structure (32).

5. End plate according to one of the preceding claims, wherein the core comprises cellulose.

6. End plate according to one of the preceding claims, wherein the core further comprises reinforcement elements (34); and
wherein the reinforcement elements are configured to structurally strengthen the pores.

7. End plate according to claim 6, wherein
the reinforcement elements are provided as a filler material (36), the filler material filling out at least a part of pore volume of the core; and
wherein the filler material is configured to provide for compressive strength, structural stiffness and electric insulation.

8. End plate according to claim 7, wherein
at least 50% of the pore volume comprises the filler material; and
wherein, preferably, filled pore volume (38) and unfilled pore volume (40) are equally distributed across the porous structure.

9. End plate according to one of the preceding claims, wherein the first fibre composite structure of the outer end plate layer comprises symmetrical fibre layers comprising fibre orientations of 0, +-45, and 90 degrees; and
wherein, preferably, the first fibre composite structure makes the outer end plate layer quasi-isotropic.

10. End plate according to one of the preceding claims, wherein at least one media port (42) is provided in a lateral portion (44) of the abutting layer for supplying fuel to the cell assembly;
wherein the at least one media port is extending to an opposite face of the outer end plate layer; and
wherein, preferably, a lateral cover block (46) is provided having at least one void (48) forming the at least one media port running lateral to an end face of the core and the outer end plate layer.

11. End plate according to one of the preceding claims, wherein a current collector (50) for connecting cells of a cell assembly is provided at least partially embedded in the abutting layer;
wherein at least a part of a surface (52) of the current collector is exposed to face the cell assembly; and
wherein, preferably, the abutting layer overlaps at least one side portion (dashed circle 51) of the current collector providing an engaging mount (52).

12. A fuel cell (100), comprising:
- a plurality of fuel cells (102) arranged as a cell assembly (104);
- a lower plate (106) and an upper plate (108);
- at least one fastening element (110); and
- a plurality of current collectors (112);
wherein the cell assembly is arranged between the lower plate and the upper plate;
wherein the at least one fastening element secures the lower plate and the upper plate against each other such that the cell assembly is fixedly hold between the lower plate and the upper plate;
wherein the plurality of current collectors is arranged between the cell assembly and the lower plate and the upper plate;
wherein at least one of the lower plate and the upper plate is provided as an end plate according to one of the preceding claims; and
wherein the end plate faces the cell assembly with an abutting layer (114).

13. Fuel cell according to claim 12, wherein the lower plate and the upper plate are both provided as an end plate according to one of the claims 1 to 11.

14. An energy supply system (200), comprising:
- a fluid reservoir (202);
- a fluid supply (204); and
- a fuel cell (206) according to claim 12 or 13;
wherein the fluid reservoir is configured to supply fluid, via the fluid supply to the fuel cell;
wherein the fluid supply is configured to be connected to the fuel cell;
wherein the fluid supply is configured to supply and discharge media ;
wherein the end plates of the fuel cell are configured to provide access and connection for the fluid supply and electrical outlets to the fuel cell; and
wherein the fuel cell is configured to provide energy from the fluid by its electrical outlets through the end plates.

15. A method (300) for manufacturing of end plates for a cell assembly, comprising the following steps:
- Providing (302) a first layer forming an outer end plate layer;
wherein the outer end plate layer comprises a first fibre composite structure providing structural tensile strength in a plane orientation of the outer end plate layer and forming a supporting structure to an abutting layer and a core;
- Providing (304) the core between the first layer and a second layer;
wherein the core is provided as a sandwich core between the outer end plate layer and the abutting layer;
wherein the core along with the outer end plate layer provides a torsional and/or bending stiffness to the end plate;
wherein the core comprises a porous structure of a dielectric material comprising a plurality of volumes, the porous structure providing compressive strength;
- Providing (306) a second layer forming an abutting layer for the cell assembly;
wherein the first fibre composite structure comprises a first fibre material and a second fibre composite structure comprises a second fibre material that is different than the first material;
wherein the abutting layer comprises the second fibre composite structure providing structural tensile strength in a plane orientation of the abutting layer;
wherein the abutting layer provides an electrical insulation for the abutting cell assembly, the abutting layer also providing a leak-tightness for media during operation of the fuel cell;
wherein the outer end plate layer and the abutting layer are each connected to the core in a laminar manner, such that a sandwich plate is formed; and
wherein a current collector is joined to the abutting layer and the abutting layer is formed to overlap on the edge of the current collector, such that a sandwich plate is formed.

## Patentansprüche

1. Endplatte (10) für eine Brennstoffzelle, wobei die Endplatte umfasst:
- eine erste Schicht, die eine äußere Endplattenschicht (12) bildet;
- eine zweite Schicht, die eine angrenzende Schicht (14) für eine Zellenanordnung der Brennstoffzelle bildet; und
- einem Kern (16) zwischen der ersten Schicht und der zweiten Schicht;
wobei die äußere Endplattenschicht eine erste Faserverbundstruktur umfasst, die strukturelle Zugfestigkeit in einer ebenen Ausrichtung der äußeren Endplattenschicht bereitstellt und eine Stützstruktur für die angrenzende Schicht und den Kern bildet;
wobei die angrenzende Schicht eine zweite Faserverbundstruktur umfasst, die strukturelle Zugfestigkeit in einer ebenen Ausrichtung der angrenzenden Schicht bereitstellt;
wobei die angrenzende Schicht eine elektrische Isolierung für die angrenzende Zellenanordnung bereitstellt, wobei die angrenzende Schicht auch eine Leckdichtigkeit für Medien während des Betriebs der Brennstoffzelle bereitstellt;
wobei die erste Faserverbundstruktur ein erstes Fasermaterial (18) umfasst und die zweite Faserverbundstruktur ein zweites Fasermaterial (20) umfasst, das sich vom ersten Material unterscheidet;
wobei der Kern als Sandwichkern zwischen der äußeren Endplattenschicht und der angrenzenden Schicht bereitgestellt ist;
wobei der Kern zusammen mit der äußeren Endplattenschicht die Torsions- und/oder Biegesteifigkeit der Endplatte bereitstellt;
wobei der Kern eine poröse Struktur (22) aus einem dielektrischen Material umfasst, das eine Vielzahl von Volumina umfasst, wobei die poröse Struktur Druckfestigkeit bereitstellt; und
wobei die äußere Endplattenschicht und die angrenzende Schicht jeweils laminar (24) mit dem Kern verbunden sind, so dass eine Sandwichplatte gebildet wird.

2. Endplatte nach Anspruch 1, wobei die erste Faserverbundstruktur Kohlenstofffasern umfasst; und
wobei die zweite Faserverbundstruktur Glasfasern umfasst.

3. Endplatte nach Anspruch 1 oder 2, wobei die poröse Struktur die Vielzahl von Volumina als Porenvolumen (26) und Porenwände (28) bereitstellt;
wobei vorzugsweise die Öffnungen der Poren (30) der Porenstruktur zur äußeren Endplattenschicht und zur angrenzenden Schicht hin offen sind; und
wobei sich die Porenwände vorzugsweise quer zur äußeren Endplattenschicht und zur angrenzenden Schicht erstrecken.

4. Endplatte nach Anspruch 1, 2 oder 3, wobei die poröse Struktur eine Wabenstruktur (32) umfasst.

5. Endplatte nach einem der vorstehenden Ansprüche, wobei der Kern Cellulose umfasst.

6. Endplatte nach einem der vorstehenden Ansprüche, wobei der Kern ferner Verstärkungselemente (34) umfasst; und
wobei die Verstärkungselemente so konfiguriert sind, dass sie die Poren strukturell verstärken.

7. Endplatte gemäß Anspruch 6, wobei die Verstärkungselemente als Füllmaterial (36) bereitgestellt sind, wobei das Füllmaterial mindestens einen Teil des Porenvolumens des Kerns ausfüllt; und
wobei das Füllmaterial so konfiguriert ist, dass es für Druckfestigkeit, strukturelle Steifigkeit und elektrische Isolierung sorgt.

8. Endplatte nach Anspruch 7, wobei mindestens 50 % des Porenvolumens das Füllmaterial umfassen; und
wobei vorzugsweise das gefüllte Porenvolumen (38) und das ungefüllte Porenvolumen (40) gleichmäßig über die poröse Struktur verteilt sind.

9. Endplatte gemäß einem der vorstehenden Ansprüche, wobei die erste Faserverbundstruktur der äußeren Endplattenschicht symmetrische Faserschichten umfasst, die Faserausrichtungen von 0, +-45 und 90 Grad umfassen; und
wobei vorzugsweise die erste Faserverbundstruktur die äußere Endplattenschicht quasi-isotrop macht.

10. Endplatte gemäß einem der vorstehenden Ansprüche, wobei mindestens ein Medienanschluss (42) in einem seitlichen Abschnitt (44) der angrenzenden Schicht bereitgestellt ist, um die Zellenanordnung mit Brennstoff zu versorgen;
wobei sich der mindestens eine Medienanschluss bis zu einer gegenüberliegenden Fläche der äußeren Endplattenschicht erstreckt; und
wobei vorzugsweise ein seitlicher Abdeckblock (46) mit mindestens einem Hohlraum (48) bereitgestellt ist, der den mindestens einen Medienanschluss bildet, der seitlich zu einer Endfläche des Kerns und der äußeren Endplattenschicht verläuft.

11. Endplatte gemäß einem der vorstehenden Ansprüche, wobei ein Stromkollektor (50) zum Verbinden von Zellen einer Zellenanordnung bereitgestellt ist, der zumindest teilweise in die angrenzende Schicht eingebettet ist;
wobei mindestens ein Teil einer Oberfläche (52) des Stromkollektors freiliegt, um der Zellenanordnung zugewandt zu sein; und
wobei vorzugsweise die anliegende Schicht mindestens einen Seitenabschnitt (gestrichelter Kreis 51) des Stromkollektors überlappt und eine Eingriffsbefestigung (52) bildet.

12. Eine Brennstoffzelle (100), umfassend:
- eine Vielzahl von Brennstoffzellen (102), die als Zellenanordnung (104) angeordnet sind;
- eine untere Platte (106) und eine obere Platte (108);
- mindestens ein Befestigungselement (110); und
- eine Vielzahl von Stromkollektoren (112);
wobei die Zellenanordnung zwischen der unteren Platte und der oberen Platte angeordnet ist;
wobei das mindestens eine Befestigungselement die untere Platte und die obere Platte so aneinander befestigt, dass die Zellenanordnung fest zwischen der unteren Platte und der oberen Platte gehalten wird;
wobei die mehreren Stromkollektoren zwischen der Zellenanordnung und der unteren Platte und der oberen Platte angeordnet sind;
wobei mindestens eine der unteren Platte und der oberen Platte als Endplatte gemäß einem der vorstehenden Ansprüche bereitgestellt ist; und
wobei die Endplatte der Zellenanordnung mit einer anstoßenden Schicht (114) zugewandt ist.

13. Brennstoffzelle gemäß Anspruch 12, wobei sowohl die untere Platte als auch die obere Platte als Endplatte gemäß einem der Ansprüche 1 bis 11 bereitgestellt sind.

14. Energieversorgungssystem (200), umfassend:
- einem Fluidreservoir (202);
- eine Fluidzufuhr (204); und
- eine Brennstoffzelle (206) gemäß Anspruch 12 oder 13;
wobei das Fluidreservoir so konfiguriert ist, dass er über die Fluidzufuhr Fluid an die Brennstoffzelle liefert;
wobei die Fluidzufuhr so konfiguriert ist, dass sie mit der Brennstoffzelle verbunden werden kann;
wobei die Fluidzufuhr so konfiguriert ist, dass sie Medien zuführt und abführt;
wobei die Endplatten der Brennstoffzelle so konfiguriert sind, dass sie Zugang und Anschluss für die Fluidzufuhr und elektrische Ausgänge zur Brennstoffzelle bieten; und
wobei die Brennstoffzelle so konfiguriert ist, dass sie über ihre elektrischen Ausgänge durch die Endplatten Energie aus dem Fluid bereitstellt.

15. Verfahren (300) zur Herstellung von Endplatten für eine Zellenanordnung, das die folgenden Schritte umfasst:
- Bereitstellen (302) einer ersten Schicht, die eine äußere Endplattenschicht bildet;
wobei die äußere Endplattenschicht eine erste Faserverbundstruktur umfasst, die eine strukturelle Zugfestigkeit in einer ebenen Ausrichtung der äußeren Endplattenschicht bereitstellt und eine Stützstruktur für eine angrenzende Schicht und einen Kern bildet;
- Bereitstellen (304) des Kerns zwischen der ersten Schicht und einer zweiten Schicht;
wobei der Kern als Sandwichkern zwischen der äußeren Endplattenschicht und der angrenzenden Schicht bereitgestellt ist;
wobei der Kern zusammen mit der äußeren Endplattenschicht der Endplatte eine Torsions- und/oder Biegesteifigkeit verleiht;
wobei der Kern eine poröse Struktur aus einem dielektrischen Material umfassend eine Vielzahl von Volumina umfasst, wobei die poröse Struktur Druckfestigkeit bereitstellt;
- Bereitstellen (306) einer zweiten Schicht, die eine anliegende Schicht für die Zellenanordnung bildet;
wobei die erste Faserverbundstruktur ein erstes Fasermaterial umfasst und eine zweite Faserverbundstruktur ein zweites Fasermaterial umfasst, das sich vom ersten Material unterscheidet;
wobei die angrenzende Schicht die zweite Faserverbundstruktur umfasst, die strukturelle Zugfestigkeit in einer ebenen Ausrichtung der angrenzenden Schicht bereitstellt;
wobei die angrenzende Schicht eine elektrische Isolierung für die aneinanderstoßende Zellenanordnung bereitstellt, wobei die angrenzende Schicht auch eine Leckdichtigkeit für Medien während des Betriebs der Brennstoffzelle bereitstellt;
wobei die äußere Endplattenschicht und die angrenzende Schicht jeweils laminar mit dem Kern verbunden sind, so dass eine Sandwichplatte gebildet wird; und
wobei ein Stromkollektor mit der angrenzenden Schicht verbunden ist und die angrenzende Schicht so ausgebildet ist, dass sie den Rand des Stromkollektors überlappt, so dass eine Sandwichplatte gebildet wird.

## Revendications

1. Plaque d'extrémité (10) pour une pile à combustible, la plaque d'extrémité comprenant :
- une première couche formant une couche de plaque d'extrémité extérieure (12);
- une deuxième couche formant une couche d'aboutement (14) pour un assemblage de piles de la pile à combustible; et
- un noyau (16) entre la première couche et la deuxième couche;
dans lequel la couche de plaque d'extrémité extérieure comprend une première structure composite en fibre fournissant une résistance à la traction structurelle dans une orientation plane de la couche de plaque d'extrémité extérieure et forme une structure de support pour la couche d'aboutement et le noyau;
dans lequel la couche d'aboutement comprend une deuxième structure composite en fibres fournissant une résistance à la traction structurelle dans une orientation plane de la couche d'aboutement;
dans lequel la couche d'aboutement fournit une isolation électrique pour l'assemblage de piles d'aboutement, la couche d'aboutement fournissant également une étanchéité aux fluides pendant le fonctionnement de la pile à combustible;
dans lequel la première structure composite en fibres comprend un premier matériau fibreux (18) et la deuxième structure composite en fibres comprend un deuxième matériau fibreux (20) qui est différent du premier matériau;
dans lequel le noyau est fourni sous la forme d'un noyau sandwich entre la couche de plaque d'extrémité extérieure et la couche d'aboutement;
dans lequel le noyau, conjointement avec la couche de plaque d'extrémité extérieure, confère à la plaque d'extrémité une rigidité en torsion et/ou en flexion;
dans lequel le noyau comprend une structure poreuse (22) d'un matériau diélectrique comprenant une pluralité de volumes, la structure poreuse fournissant une résistance à la compression; et
dans lequel la couche de plaque d'extrémité extérieure et la couche d'aboutement sont chacune reliées au noyau de manière laminaire (24), de sorte qu'une plaque sandwich est formée.

2. Plaque d'extrémité selon la revendication 1, dans laquelle la structure composite en fibre comprend des fibres de carbone; et
dans laquelle la deuxième structure composite en fibre comprend des fibres de verre.

3. Plaque d'extrémité selon la revendication 1 ou 2, dans laquelle la structure poreuse fournit la pluralité de volumes sous forme du volume des pores (26) et de parois des pores (28);
dans laquelle, de préférence, les ouvertures des pores (30) de la structure poreuse s'ouvrent vers la couche de plaque d'extrémité extérieure et la couche d'aboutement; et
dans laquelle, de préférence, les parois des pores s'étendent transversalement à la couche de plaque d'extrémité extérieure et à la couche d'aboutement.

4. Plaque d'extrémité selon la revendication 1, 2 ou 3, dans laquelle la structure poreuse comprend une structure en nid d'abeilles (32).

5. Plaque d'extrémité selon l'une des revendications précédentes, dans laquelle le noyau comprend de la cellulose.

6. Plaque d'extrémité selon l'une des revendications précédentes, dans laquelle le noyau comprend en outre des éléments de renfort (34); et
dans laquelle les éléments de renfort sont configurés pour renforcer structurellement les pores.

7. Plaque d'extrémité selon la revendication 6, dans laquelle les éléments de renfort sont fournis sous forme de matériau de remplissage (36), le matériau de remplissage remplissant au moins une partie du volume des pores du noyau; et
dans laquelle le matériau de remplissage est configuré pour fournir une résistance à la compression, une rigidité structurelle et une isolation électrique.

8. Plaque d'extrémité selon la revendication 7, dans laquelle au moins 50 % du volume des pores comprend le matériau de remplissage; et
dans laquelle, de préférence, le volume des pores remplis (38) et le volume des pores non remplis (40) sont répartis de manière égale dans la structure poreuse.

9. Plaque d'extrémité selon l'une des revendications précédentes, dans laquelle la structure composite en fibre de la couche de plaque d'extrémité extérieure comprend des couches de fibres symétriques comprenant des orientations de fibres de 0, +-45 et 90 degrés; et
dans laquelle, de préférence, la première structure composite en fibres rend la couche de plaque d'extrémité extérieure quasi isotrope.

10. Plaque d'extrémité selon l'une des revendications précédentes, dans laquelle au moins un orifice de passage de fluide (42) est fourni dans une partie latérale (44) de la couche d'aboutement pour alimenter en combustible l'assemblage de piles;
dans laquelle le au moins un orifice de passage de fluide s'étend jusqu'à une face opposée de la couche de plaque d'extrémité extérieure; et
dans laquelle, de préférence, un bloc de couverture latéral (46) est fourni, comportant au moins un vide (48) formant le au moins un orifice de passage de fluide s'étendant latéralement à une face d'extrémité du noyau et à la couche de plaque d'extrémité extérieure.

11. Plaque d'extrémité selon l'une des revendications précédentes, dans laquelle un collecteur de courant (50) destiné à connecter les piles d'un assemblage de piles est fourni au moins partiellement encastré dans la couche d'aboutement;
dans laquelle au moins une partie d'une surface (52) du collecteur de courant est exposée pour faire face à l'assemblage de piles; et
dans laquelle, de préférence, la couche d'aboutement recouvre au moins une partie latérale (cercle en pointillés 51) du collecteur de courant, fournissant un support d'engagement (52).

12. Pile à combustible (100), comprenant :
- une pluralité de piles à combustible (102) disposées sous la forme d'un assemblage de piles (104);
- une plaque inférieure (106) et une plaque supérieure (108);
- au moins un élément de fixation (110); et
- une pluralité de collecteurs de courant (112);
dans lequel l'assemblage de piles est disposé entre la plaque inférieure et la plaque supérieure;
dans lequel le au moins un élément de fixation maintient la plaque inférieure et la plaque supérieure l'une contre l'autre de telle sorte que l'assemblage de piles soit maintenu de manière fixe entre la plaque inférieure et la plaque supérieure;
dans lequel la pluralité de collecteurs de courant est disposée entre l'assemblage de piles et la plaque inférieure et la plaque supérieure;
dans lequel au moins l'une des plaque inférieure et plaque supérieure est fournie comme plaque d'extrémité selon l'une des revendications précédentes; et
dans lequel la plaque d'extrémité fait face à l'assemblage de piles avec une couche d'aboutement (114).

13. Pile à combustible selon la revendication 12, dans laquelle la plaque inférieure et la plaque supérieure sont toutes deux fournies comme plaque d'extrémité selon l'une des revendications 1 à 11.

14. Système d'alimentation en énergie (200), comprenant :
- un réservoir de fluide (202);
- une alimentation en fluide (204); et
- une pile à combustible (206) selon la revendication 12 ou 13;
dans laquelle le réservoir de fluide est configuré pour fournir du fluide, via l'alimentation en fluide, à la pile à combustible;
dans lequel l'alimentation en fluide est configurée pour être connectée à la pile à combustible;
dans lequel l'alimentation en fluide est configurée pour fournir et évacuer des fluides;
dans laquelle les plaques d'extrémité de la pile à combustible sont configurées pour fournir un accès et une connexion pour l'alimentation en fluide et les prises électriques à la pile à combustible; et
dans laquelle la pile à combustible est configurée pour fournir de l'énergie à partir du fluide par ses prises électriques à travers les plaques d'extrémité.

15. Procédé (300) de fabrication de plaques d'extrémité pour un assemblage de piles, comprenant les étapes suivantes :
- Fournir (302) une première couche formant une couche de plaque d'extrémité extérieure;
dans laquelle la couche de plaque d'extrémité extérieure comprend une première structure composite en fibres fournissant une résistance à la traction structurelle dans une orientation plane de la couche de plaque d'extrémité extérieure et formant une structure de support pour une couche d'aboutement et un noyau;
- Fournir (304) le noyau entre la première couche et une deuxième couche;
dans lequel le noyau est fourni sous la forme d'un noyau sandwich entre la couche de plaque d'extrémité extérieure et la couche d'aboutement;
dans lequel le noyau, conjointement avec la couche de plaque d'extrémité extérieure, confère une rigidité en torsion et/ou en flexion à la plaque d'extrémité;
dans lequel le noyau comprend une structure poreuse d'un matériau diélectrique comprenant une pluralité de volumes, la structure poreuse fournissant une résistance à la compression;
- Fournir (306) une deuxième couche formant une couche d'aboutement pour l'assemblage de piles;
dans lequel la structure composite en fibre comprend un premier matériau fibreux et une deuxième structure composite en fibre comprend un deuxième matériau fibreux qui est différent du premier matériau;
dans lequel la couche d'aboutement comprend la deuxième structure composite en fibre fournissant une résistance à la traction structurelle dans une orientation plane de la couche d'aboutement;
dans lequel la couche d'aboutement fournit une isolation électrique pour l'assemblage de piles en butée, la couche d'aboutement fournissant également une étanchéité aux fluides pendant le fonctionnement de la pile à combustible;
dans lequel la couche de plaque d'extrémité extérieure et la couche d'aboutement sont chacune reliées au noyau de manière laminaire, de sorte qu'une plaque sandwich est formée; et
dans lequel un collecteur de courant est relié à la couche d'aboutement et la couche d'aboutement est formée de manière à chevaucher le bord du collecteur de courant, de telle sorte qu'une plaque sandwich est formée.
